# FASCICULE DE BREVET EUROPEEN

(11) **EP 1 344 896 B1**
(45) Date de publication et mention de la délivrance du brevet: **05.07.2006**
(21) Numéro de dépôt: 03290626.5
(22) Date de dépôt: 13.03.2003
(51) Int. Cl.: F01D 21/04, F01D 25/16, F16C 19/52

(54) **Dispositif de support et de recentrage d'un arbre d'une soufflante d'un turboréacteur après découplage**
Einrichtung, um eine Bläserwelle nach einer Havarie wieder zu lagern und zu rezentrieren
Device for supporting and recentering a fan-shaft of a turbofan after failure due to inbalance

(30) Priorité: 14.03.2002 FR 0203151
(43) Date de publication de la demande: 17.09.2003
(73) Titulaire: SNECMA, 75015 Paris (FR)
(72) Inventeur: Morel, Patrick, 77590 Chartrettes (FR); Plona, Daniel, 77870 Vulaines sur Seine (FR)
(74) Mandataire: Le Bras, Hervé

(56) Documents cités:
- EP-A- 0 874 137
- EP-A- 1 022 438
- FR-A- 2 452 034
- FR-A- 2 485 631
- GB-A- 1 556 266

## Description

L'invention concerne le problème de l'intégrité des turboréacteurs à la suite d'une avarie de soufflante.

Les turboréacteurs comportent un moteur qui entraîne une soufflante de grand diamètre disposée à l'avant du moteur. Les pales de la soufflante peuvent être abîmées par suite de l'ingestion de corps étrangers. En général, la soufflante est assez robuste pour supporter les effets de telles ingestions de corps étrangers sans trop de dommage et est capable de continuer à fonctionner avec peut-être une efficacité réduite.

Dans certaines circonstances toutefois, la soufflante peut être abîmée au point de perdre des morceaux d'une ou plusieurs pales. Il se produit alors un balourd important et ceci oblige alors à couper le moteur pour diminuer les risques de l'aéronef. Toutefois, ce balourd créé par la perte de pales entraîne des charges cycliques extrêmement importantes qui doivent être supportées par la structure au moins pendant la baisse de régime du moteur jusqu'à la vitesse d'autorotation de la soufflante. La vitesse d'autorotation est la vitesse de rotation du moteur, à l'état de non-fonctionnement, résultant de sa vitesse de déplacement dans l'atmosphère.

Une manière habituelle d'éliminer les charges cycliques devant être supportées par la structure consiste à désaccoupler l'arbre de rotation de la soufflante de la structure de support au niveau du palier avant de l'arbre. Ceci est réalisé habituellement en interposant entre le palier et la structure de support du palier des éléments fusibles qui se rompent dès que les forces radiales à supporter par le palier dépassent une valeur prédéterminée.

L'arbre de la soufflante est alors libre de se déplacer radialement dans une certaine mesure et de tourner autour de l'axe longitudinal de symétrie du moteur, et la soufflante se met à tourner autour d'un axe de rotation passant sensiblement au voisinage de son nouveau centre de gravité.

Toutefois, dans certaines circonstances, la vibration résultant du balourd qui persiste à la vitesse d'autorotation peut encore être très importante. Ceci est dû à la fréquence naturelle de vibration de la soufflante et à la diminution de la raideur radiale du palier de support. Aussi existe-t-il dans certains agencements de support d'arbre des moyens pour conserver une certaine raideur au palier, voire de ramener l'axe de l'arbre sensiblement coaxialement à l'axe du moteur.

EP 0 874 137 prévoit d'interposer entre la bague extérieure du palier et la structure de support un élément de support normalement immobilisé par des éléments fusibles radialement et qui peut coulisser dans une cavité annulaire après rupture des éléments fusibles. Cet élément vient alors en appui sur un amortisseur qui tend à le ramener vers la position initiale. La cavité annulaire se présente sous la forme d'une calotte creuse délimitée par deux parois sphériques concentriques, contre lesquelles frottent des surfaces de l'élément de support, ce qui entraîne une imprécision dans le recentrage.

US 6 009 701 décrit également un palier de support d'un arbre de soufflante dont la bague extérieure est fixée à la structure fixe par des éléments fusibles radialement, afin de libérer l'arbre par rapport à la structure fixe en cas de rupture des éléments fusibles. La bague extérieure est entourée par un anneau ouvert de forme hélicoïdale qui est susceptible de coopérer avec une paroi conique solidaire de la structure fixe. Cette paroi conique présente une gorge interne hélicoïdale qui permet de déplacer l'anneau hélicoïdal d'une position extrême où le débattement possible de l'arbre est maximum vers l'autre position extrême où l'axe de l'arbre est de nouveau coaxial à l'axe du moteur, par suite de la rotation de l'arbre autour de l'axe du moteur pendant la baisse de régime de la soufflante de sa vitesse en fonctionnement jusqu'à la vitesse d'autorotation.

L'état de la technique est également illustré par US 5 733 050 et US 6 098 399.

Il est à noter que, dans tous ces documents, les éléments fusibles sont interposés entre la bague extérieure du palier et la structure fixe du moteur. Après la rupture des éléments fusibles, le palier est alors décentré par rapport à l'axe géométrique du moteur. Or, le palier avant de la soufflante est alimenté en huile par des buses solidaires de la structure fixe. Ces buses peuvent être abîmées lors du déplacement axial du palier et US 5 733 050 le prévoit expressément. Ceci peut entraîner des dommages au palier lors du régime d'autorotation, si ce régime persiste pendant une très longue période, par suite du défaut de lubrification.

Le premier but de l'invention est d'assurer un recentrage précis de l'arbre après le découplage.

Le deuxième but de l'invention est de conserver l'intégrité des moyens de lubrification après le découplage.

L'invention concerne donc un dispositif pour supporter radialement l'avant d'un arbre d'entraînement d'une soufflante d'un turboréacteur d'axe longitudinal X, l'axe géométrique dudit arbre étant normalement coaxial audit axe longitudinal X, ledit dispositif comportant un support annulaire fixe entourant ledit arbre, un palier de support disposé entre ledit arbre et ledit support et présentant une bague extérieure fixe en rotation et une bague intérieure mobile en rotation avec ledit arbre, des moyens fusibles radialement interposés entre l'une desdites bagues et la pièce adjacente de l'ensemble constitué par ledit arbre et ledit support et destinés à rompre dès l'apparition d'une force radiale d'intensité supérieure à un seuil prédéterminé afin de libérer radialement ledit arbre par rapport audit support, et des moyens pour recentrer l'axe géométrique de l'arbre sur l'axe longitudinal du turboréacteur après la rupture desdits moyens fusibles.

Ce dispositif est caractérisé par le fait que les moyens fusibles radialement comportent deux ailes annulaires sectorisées ou tenons prévus respectivement dans les régions radialement extérieures de la bague intérieure et qui s'étendent axialement vers l'extérieur, les extrémités desdits ailes ou tenons étant normalement retenus à la périphérie de deux coupelles annulaires axialement espacées et solidaires en rotation de l'arbre, la région radialement intérieure de la bague intérieure étant radialement espacée de l'arbre afin de permettre le débattement de l'arbre en cas de rupture desdits ailes ou tenons, et par le fait que les moyens pour recentrer l'axe géométrique de l'arbre sur l'axe longitudinal dudit turboréacteur comportent deux ensembles de billes disposés chacun entre une face axiale de la bague intérieure et la coupelle adjacente, chaque bille étant normalement en appui dans les fonds de deux cuvettes ménagées en vis-à-vis l'une dans la coupelle adjacente et l'autre dans la face frontale adjacente de la bague intérieure, et des moyens élastiques sollicitant lesdites coupelles l'une vers l'autre afin de ramener les billes vers les fonds desdites cuvettes.

Ainsi, en fonctionnement normal, lorsque les charges radiales supportées par le palier ont une intensité inférieure au seuil prédéterminé, la bague intérieure est solidaire des coupelles et les billes sont positionnées dans le fond des cuvettes. Lorsqu'à la suite d'une avarie de la soufflante, le balourd crée des charges radiales d'une intensité au moins égale au seuil prédéterminé, les ailes ou tenons de la bague intérieure se brisent, et l'arbre peut se déplacer par rapport à l'axe géométrique du turboréacteur qui est également l'axe géométrique de la bague intérieure. Les billes gravissent les pentes des coupelles et écartent ces dernières, ce qui augmente les forces exercées par les moyens élastiques jusqu'à rééquilibrage du rotor. L'effort radial diminuant avec la vitesse de rotation, l'arbre est recentrée par les billes avec un effort de frottement très faible. Pendant la période où les coupelles sont décentrées par rapport à la bague intérieure, les billes roulent sur les parois des deux cuvettes en vis-à-vis autour du centre de ces cuvettes, avec un effort de frottement très faible.

Le dispositif selon l'invention permet ainsi de limiter les dégâts secondaires au moteur et à la structure de l'aéronef pendant la phase d'autorotation qui suit un découplage. Il est à noter en outre que le déplacement radial de l'arbre est limité par le contact entre l'arbre et la bague intérieure.

Très avantageusement, chaque cuvette est de révolution autour d'un axe normalement parallèle à l'axe longitudinal X.

De préférence, les moyens élastiques sont en appui sur la face axialement externe de l'une des coupelles, et l'autre coupelle est axialement fixe par rapport à l'arbre.

D'autres avantages et caractéristiques de l'invention ressortiront à la lecture de la description suivante faite à titre d'exemple et en référence aux dessins annexés dans lesquels :
- la figure 1 est une vue générale de l'invention en mode de fonctionnement normal ;
- la figure 2 est semblable à la figure 1 et montre le dispositif après découplage ;
- les figures 3a, 3b et 3c montrent des coupes de trois exemples de coupelles, selon un plan axial passant par le centre d'une cuvette ;
- la figure 4a montre le diagramme du déplacement de l'arbre en fonction de l'effort radial pour des cuvettes coniques conformes à celle de la figure 3a ; et
- la figure 4b montre le diagramme du déplacement de l'arbre en fonction de l'effort radial pour des cuvettes conformes à celle de la figure 3b.

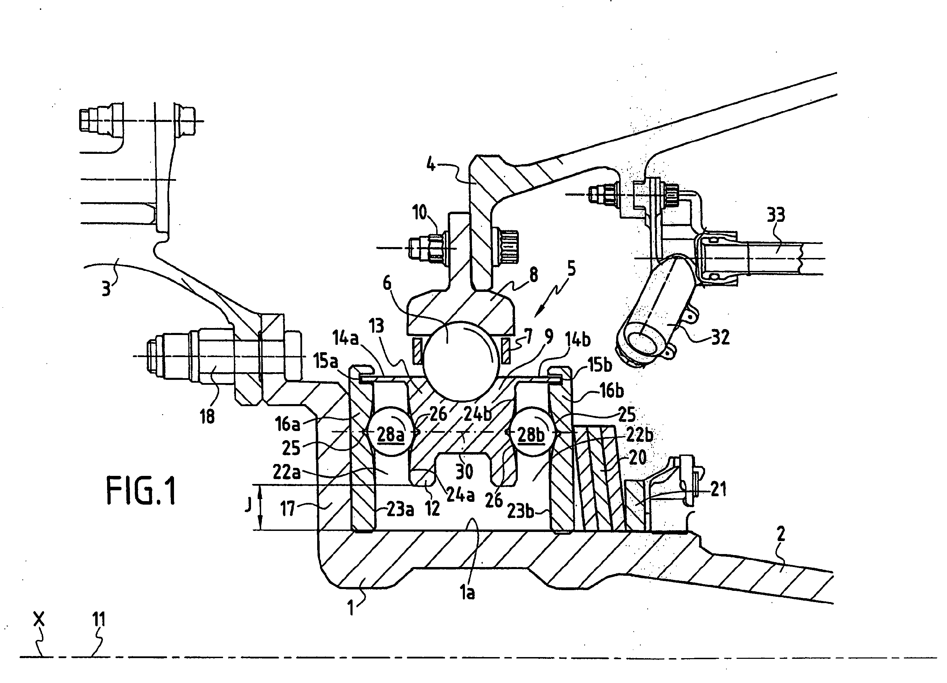

La figure 1 montre la partie avant 1 d'un arbre d'entraînement 2 du moyeu 3 d'une soufflante d'un turboréacteur ayant un axe longitudinal X. L'arbre 2 est entraîné en rotation par une turbine basse pression non montrée sur le dessin.

Cette partie avant 1 est supportée radialement par un support annulaire fixe 4 de la structure du turboréacteur au moyen d'un palier 5 qui comporte des billes 6 positionnées dans des cavités d'une cage 7 interposée entre une bague extérieure 8 et une bague intérieure 9.

Le support annulaire fixe 4 coaxial à l'axe longitudinal X entoure la partie avant 1 de l'arbre 2, et la bague extérieure 8 est bridée sur le support annulaire 4 au moyen de vis et écrous 10.

Dans les conditions normales de fonctionnement, l'axe géométrique 11 de l'arbre 2 est confondu avec l'axe longitudinal X du turboréacteur.

Ainsi que cela se voit clairement sur la figure 1, la face radialement intérieure 12 de la bague intérieure 9 est espacée de la face externe 1a de l'arbre 2 d'une distance ou jeu J, et la région radialement extérieure 13 de la bague intérieure 9 comporte deux ailes annulaires ou tenons 14a et 14b qui s'étendent axialement vers l'extérieur de la bague intérieure 9, l'aile 14a s'étendant vers l'avant du turboréacteur et l'aile 14b s'étendant vers l'arrière.

L'extrémité avant de l'aile ou du tenon 14a est retenue dans une rainure 15a ménagée à la périphérie d'une première coupelle annulaire 16a, solidaire en rotation de l'arbre 2 et dont la face avant est en appui contre la bride d'extrémité 17 de la partie avant 1 de l'arbre 2 sur laquelle le moyeu 3 de la soufflante est fixé par des vis-écrous 18.

De la même manière, l'extrémité arrière de l'aile 14b est retenue dans une rainure 15b ménagée à la périphérie d'une deuxième coupelle annulaire 16b solidaire en rotation de l'arbre 2.

Des cales élastiques 20 sont interposées entre la face arrière de la deuxième coupelle 16b et une butée annulaire 21 d'axe 11 qui entoure l'arbre 2 et est fixée axialement sur cette dernière. Les cales élastiques 20 sollicitent en permanence la deuxième coupelle 16b vers la première coupelle 16a qui est fixe axialement par rapport à l'arbre 2. La deuxième coupelle 16b en revanche est montée sur l'arbre 2 de telle manière qu'elle puisse se déplacer axialement.

La longueur axiale des ailes ou des tenons 14a et 14b est telle que des espaces annulaires 22a et 22b séparent respectivement la face arrière 23a de la première coupelle 16a et la face avant 24a de la bague intérieure 9, et la face arrière 24b de la bague intérieure 9 et la face avant 23b de la deuxième coupelle 9.

La face arrière 23a de la première coupelle 16a et la face avant 24a de la bague intérieure 9 présentent chacune une pluralité de cuvettes de révolution autour d'un axe 30 parallèle à l'axe longitudinal X, référencées 25 sur la première coupelle 16a et 26 sur la bague intérieure 9, qui, dans les conditions normales de fonctionnement montrées sur la figure 1, sont en vis-à-vis.

Chaque couple de cuvettes 25 et 26 loge une bille 28a qui, dans les conditions normales de fonctionnement, est centrée sur l'axe 30 commun aux deux cuvettes 25 et 26 et est en appui dans le fond desdites deux cuvettes 25 et 26.

La face arrière 24b de la bague intérieure 9 et la face avant 23b de la deuxième coupelle 16b comportent également une pluralité de cuvettes 25 et 26, d'axe 30 retenant des billes 28b en appui dans les fonds desdites cuvettes.

Le diamètre des billes 28a et 28b est fonction de la longueur des ailes ou les tenons 14a et 14b et est calculé de telle manière que, dans les conditions normales de fonctionnement du turboréacteur, les billes 28a et 28b logent dans leurs cuvettes respectives et que les extrémités des ailes ou des tenons 14a et 14b soient retenues dans les rainures 15a et 15b des coupelles 16a et 16b.

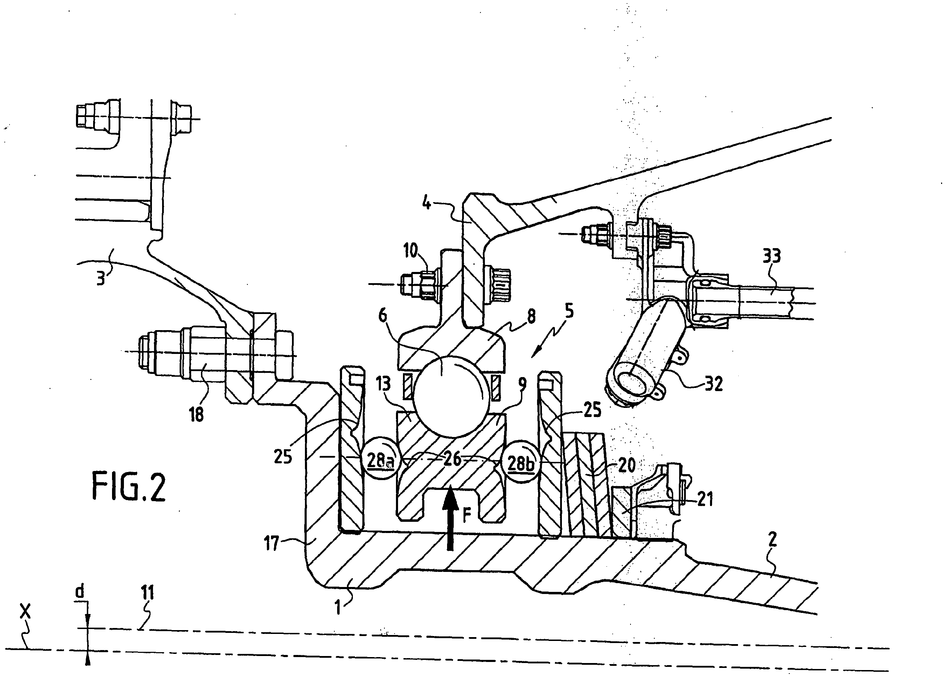

Les ailes ou les tenons 14a et 14b permettent le centrage de la bague intérieure 9 sur les coupelles 16a et 16b. L'épaisseur des ces ailes 14a et 14b est calculée de telle manière que les ailes 14a et 14b transmettent les charges radiales de l'arbre 2 à la bague intérieure 9 lorsque ces charges radiales ont une intensité inférieure à un seuil prédéterminé Fm. Lorsque les charges radiales transmises par l'arbre 2 sont égales ou supérieures à Fm, les ailes ou les tenons 14a et 14b se rompent, et la partie avant 1 de l'arbre 2 est libérée radialement par rapport à l'axe longitudinal X de la bague intérieure 9. Autrement dit, l'axe géométrique 11 de l'arbre 2 est décalé de l'axe longitudinal X d'une distance d au plus égale au jeu J entre la face intérieure 12 de la bague intérieure 9 et la face externe de l'arbre 2, ainsi que cela est montré sur la figure 2. Ceci peut se produire en cas de balourd important dû à la rupture d'une aube de la soufflante.

Lors du déplacement radial de l'arbre 2 par rapport à la bague intérieure 9, les billes 28a et 28b s'écartent des fonds de leurs cuvettes respectives 25 et 26 et se mettent à rouler sans frottement excessif sur les parois de ces cuvettes. La deuxième coupelle 16b est alors écartée de la première coupelle 16a et provoque l'écrasement des cales élastiques 20.

L'effort axial exercé par les cales élastiques 20 est compensé par les composantes axiales des forces exercées par les billes 28a et 28b sur les parois des cuvettes 25 et 26. Les forces exercées par les billes 28a et 28b sur les parois 25 et 26 ont une résultante radiale opposée à la charge radiale F de l'arbre 2. Cette charge radiale est fonction du balourd et de la vitesse de rotation de l'arbre. Dès qu'on coupe l'alimentation en carburant du moteur du turboréacteur, la vitesse de la soufflante décroît jusqu'à la vitesse de rotation, et les forces axiales appliquées par les cales élastiques 20 ont tendance à ramener les billes 28a et 28b vers le fond de leurs cuvettes 25 et 26.

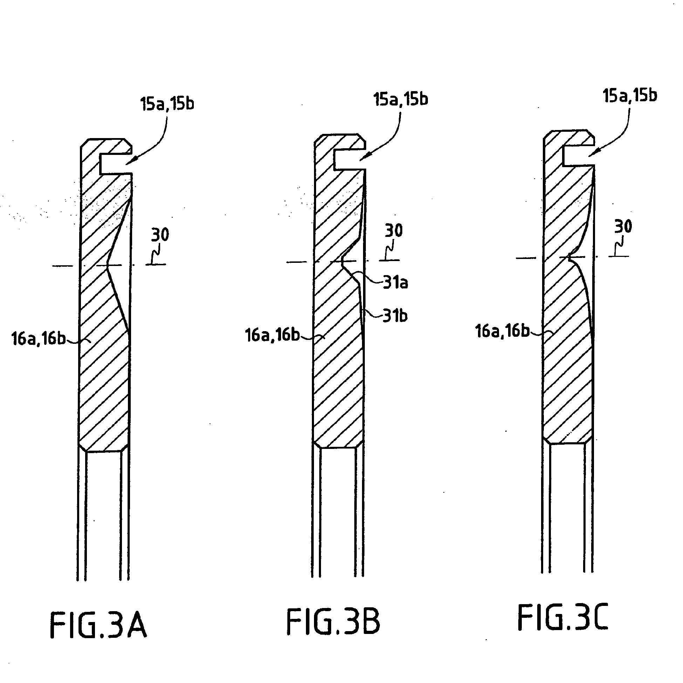

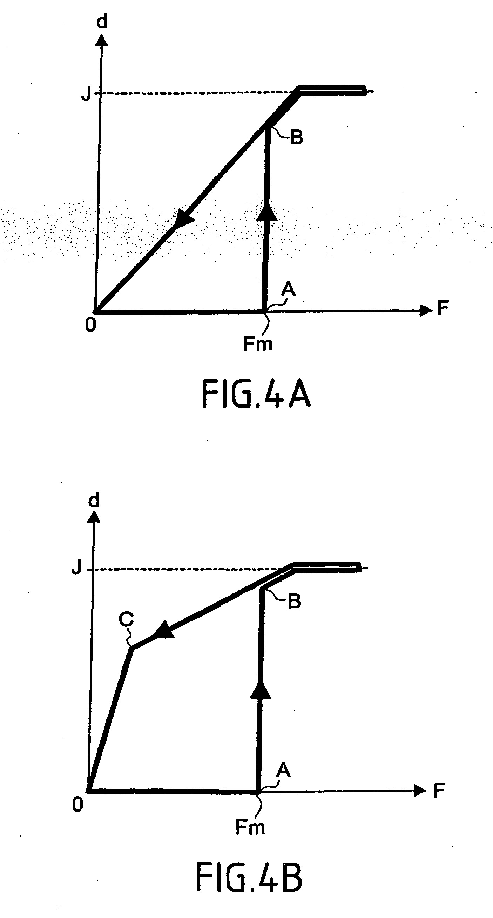

La figure 3a montre une cuvette 25 de forme conique ménagée dans une coupelle 16a ou 16b, et la figure 4a montre le diagramme du déplacement d par rapport à la force radiale F exercée par l'arbre 2 en rotation. Tant que les ailes ou les tenons 14a et 14b sont solidaires de la bague intérieure 9 et que la force F est inférieure à Fm, le déplacement d est égal à 0, ceci est représenté par le segment OA. Dès que la force F atteint ou dépasse Fm, les ailes ou les tenons 14a et 14b se rompent et l'arbre 2 se décale d'une distance d qui est habituellement inférieure à J. Lorsque la valeur J est obtenue, l'arbre 2 est en appui contre la face intérieure 12 de la bague intérieure 9. Le décalage initial est représenté par le segment AB. Dès que la force radiale diminue, par suite de la diminution de vitesse de l'arbre 2, la distance d est proportionnelle à la force F, ceci est représenté par le segment BO.

La figure 3b montre une cuvette 25 de forme biconique ménagée dans une coupelle 16a ou 16b. Tant que la force radiale F est inférieure à Fm et que les ailes ou les tenons 14a et 14b sont solidaires de la bague intérieure 9, le déplacement d est nul. Lorsque la force radiale F est égale à Fm, les ailes ou les tenons 14a et 14b se rompent et l'axe géométrique 11 de l'arbre 2 se décale d'une distance d de l'axe longitudinal X. Ce déplacement est représenté par le segment AB sur la figure 4b. Les billes 28a et 28b sont alors positionnées sur le cône extérieur 31b de la cuvette 25 et, lors de la diminution de la force radiale F, les billes se rapprochent du cône intérieur 31a. Ceci est représenté sur la figure 4b par le segment BC. Lorsque les billes 28a et 28b roulent sur la paroi du cône intérieur 31a, le rapport entre le déplacement d et la force radiale F est représenté par le segment CO sur la figure 4b.

La figure 3c montre une cuvette 25 dont le rayon de courbure va croissant lorsqu'on s'écarte de l'axe 30. Ceci permet de régler la raideur du palier 5 après la rupture des ailes ou des tenons 14a et 14b.

La cuvette 26 associée à la cuvette 25 est de préférence identique à cette cuvette 25.

La référence 32, visible sur les figures 1 et 2, montre une buse alimentée en huile par un conduit 33 solidaire de la structure fixe du turboréacteur et servant à la lubrification du palier 5. Du fait que le palier 5 est immobile radialement par rapport à la structure fixe, les buses 32 assurent également, après le découplage, une lubrification parfaite du palier 5.

## Revendications

1. Dispositif pour supporter radialement l'avant (1) d'un arbre d'entraînement (2) d'une soufflante (3) d'un turboréacteur d'axe longitudinal X, l'axe géométrique (11) dudit arbre (2) étant normalement coaxial audit axe longitudinal X, ledit dispositif comportant un support annulaire (4) fixe entourant ledit arbre (2), un palier de support (5) disposé entre ledit arbre (2) et ledit support (4) et présentant une bague extérieure (8) fixe en rotation et une bague intérieure (9) mobile en rotation avec ledit arbre (2), des moyens fusibles radialement interposés entre l'une desdites bagues (8, 9) et la pièce adjacente de l'ensemble constitué par ledit arbre (2) et ledit support (4) et destinés à rompre dès l'apparition d'une charge radiale F d'intensité supérieure à un seuil prédéterminé Fm afin de libérer radialement ledit arbre (2) par rapport audit support (4) et des moyens pour recentrer l'axe géométrique (11) de l'arbre (2) sur l'axe longitudinal X du turboréacteur après la rupture desdits moyens fusibles,
**caractérisé par le fait que** les moyens fusibles radialement comportent deux ailes annulaires sectorisées ou tenons (14a, 14b) prévus respectivement dans les régions radialement extérieures de la bague intérieure (9) et qui s'étendent axialement vers l'extérieur, les extrémités desdits ailes ou tenons (14a, 14b) étant normalement retenues à la périphérie de deux coupelles annulaires (16a, 16b) axialement espacées et solidaires en rotation de l'arbre (2), la face radialement intérieure (12) de la bague intérieure (9) étant radialement espacée de l'arbre (2) afin de permettre le débattement de l'arbre (2) en cas de rupture desdits ailes ou tenons (14a, 14b),
et **par le fait que** les moyens pour recentrer l'axe géométrique (11) de l'arbre (2) sur l'axe longitudinal X dudit turboréacteur comportent deux ensembles de billes (28a, 28b) disposés chacun entre une face (24a, 24b) axiale de la bague intérieure (9) et la coupelle (16a, 16b) adjacente, chaque bille étant normalement en appui dans les fonds de deux cuvettes ménagées en vis-à-vis l'une (25) dans la coupelle adjacente (16a, 16b) et l'autre (26) dans la face frontale adjacente (24a, 24b) de la bague intérieure (9), et des moyens élastiques (20) qui sollicitent lesdites coupelles (16a, 16b) l'une vers l'autre afin de ramener les billes (28a, 28b) vers les fonds desdites cuvettes (25, 26).

2. Dispositif selon la revendication 1, **caractérisé par le fait que** chaque cuvette (25, 26) est de révolution autour d'un axe (30) normalement parallèle à l'axe longitudinal X.

3. Dispositif selon l'une des revendications 1 ou 2, **caractérisé par le fait que** les moyens élastiques (20) sont en appui sur la face axialement externe de l'une des coupelles (16b), l'autre coupelle (16a) étant axialement fixe par rapport à l'arbre (2).

## Claims

1. A device for radially supporting the front (1) of a drive shaft (2) for a fan (3) of a turbojet of longitudinal axis X, the axis (11) of said shaft (2) normally coinciding with said longitudinal axis X, said device comprising a stationary annular support (4) surrounding said shaft (2), a support bearing (5) disposed between said shaft (2) and said support (4) and presenting an outer ring (8) that is stationary in rotation and an inner ring (9) that moves in rotation with said shaft (2), fusible means interposed radially between one of said rings (8, 9) and the adjacent part of the assembly constituted by said shaft (2) and said support (4) and designed to break on the appearance of a radial load F of magnitude greater than a predetermined threshold Fm so as to release said shaft (2) radially relative to said support (4), and means for recentering the axis (11) of the shaft (2) on the longitudinal axis X of the turbojet after said fusible means have broken,
the device being **characterised by** the fact that the radially fusible means comprise two sectorized annular webs or tenons (14a, 14b) provided in the respective radially outer regions of the inner ring (9) and extending axially outwards therefrom, the ends of said webs or tenons (14a, 14b) being normally retained in the peripheries of two annular troughs (16a, 16b) that are axially spaced apart and constrained to rotate with the shaft (2), the radially inside face (12) of the inner ring (9) being radially spaced apart from the shaft (2) so as to leave the shaft (2) with clearance in the event of said webs or tenons (14a, 14b) breaking, and
by the fact that the means for recentering the axis (11) of the shaft (2) on the longitudinal axis X of said turbojet comprise two sets of balls (28a, 28b) each disposed between an axial face (24a, 24b) of the inner ring (9) and the adjacent trough (16a, 16b), each ball normally bearing against the bottoms of two facing indentations, one indentation (25) in the adjacent trough (16a, 16b) and the other indentation (26) in the adjacent front face (24a, 24b) of the inner ring (9), and resilient means (20) urging said trough (16a, 16b) towards each other in order to return the balls (28a, 28b) towards the bottoms of said indentations (25. 26).

2. A device according to claim 1, **characterised by** the fact that each indentation (25, 26) is circularly symmetrical about an axis (30) that is normally parallel to the longitudinal axis X.

3. A device according to claim 1 or claim 2, **characterised by** the fact that the resilient means (20) bear against the axially outer face of one of the troughs (16b), the other trough (16a) being axially stationary relative to the shaft (2).

## Patentansprüche

1. Vorrichtung zum radialen Halten des vorderen Teils (1) einer Antriebswenc (2) eines Gebläses (3) eines TL-Triebwerks mit der Längsachse X, wobei die Geometrieachse (11) dieser Welle (2) normalerweise koaxial zu dieser Längsachse X verläuft, wobei diese Vorrichtung eine feststehende ringförmige Halterung (4), die um diese Weile (2) herum ausgeführt ist, ein Stützlager (5), das zwischen dieser Weite (2) und dieser Halterung (4) angeordnet ist und einen drehfesten Außenring (8) und einen mit dieser Welle (2) drehbaren Innenring (9) enthält, ferner Sicherungsmittel, die radial zwischen dem einer dieser Ringe (8, 9) und dem angrenzenden Teil der aus dieser Welle (2) und dieser Halterung (4) gebildeten Gesamtanordnung angeordnet: sind und dazu gedacht sind, bei Auftreten, einer radialen Last F mit einer Stärke, die einen vorbestimmten Schwellenwert Fm überschreitet, zu brechen, um diese Welle (2) von dieser Halterung (4) zu befreien, sowie Mittel zum Nachzentrieren der Geometrieachse (11) der Welle (2) auf der Längsachse X des TL-Triebwerks nach dem Bruch dieser Sicherungsmittel,
**dadurch gekennzeichnet,**
**dass** die Sicherungsmittel zwei segmentierte ringförmige Flügel oder Zapfen (14a, 14b) umfassen, die jeweils in den radial äußeren Bereichen des Innenrings (9) vorgesehen sind und sich axial nach außen erstrecken, wobei die Enden dieser Flügel oder Zapfen (14a, 14b) normalerweise am Außenumfang von zwei ringförmigen Schalen (16a, 16b) festgehalten werden, die axial voneinander beabstandet sind und drehfest mit der Welle (2) verbunden sind, wobei sich die radial innere Seite (12) des Innenrings (9) radial in Abstand von der Welle (2) befindet, um den Ausschlag der Welle (2) bei einem Brechen dieser Flügel oder Zapfen (14a, 14b) zu ermöglichen,
**und dass** die Mittel zum Nachzentneren der Geometrieachse (11) der Welle (2) auf der Längsachse X des TL-Triebwerks zwei Gruppen von Kugeln (28a, 28b) umfassen, die jeweils zwischen einer axialen Seite (24a, 24b) des Innenrings (9) und der angrenzenden Schale (16a, 16b) angeordnet sind, wobei sich jede Ku gel normalerweise in Anlage an den Böden, von zwei Wannen befindet, die einander gegenüber ausgeführt sind, die eine (25) in der angrenzenden Schale (16a, 16b) und die andere (26) in der angrenzenden Vorderseite (24a, 24b) des Innenrings (9), sowie elastische Mittel (20) umfassen, die diese Schalen (16a, 16b) auf einander zu drücken, um die Kugeln (28a, 28b) zu den Böden dieser Wannen (25, 26) zurückzuführen.

2. Vorrichtung nach Anspruch 1,
**dadurch gekennzeichnet,**
**dass** jede Wanne (25, 26) um eine Achse (30) umlaufend ausgeführt ist, die normalerweise parallel zur Längsachse X verläuft.

3. Vorrichtung nach einem der Ansprüche 1 oder 2,
**dadurch gekennzeichnet,**
**dass** die elastischen Mittel (20) sich in Anlage an der axial äußeren Seite der einen Schale (16b) befinden, wobei die andere Schale (16a) zur Welle (2) axial feststehend ausgeführt ist.
